(19) Europäisches Patentamt
European Patent Office
Office européen des brevets

(11) Publication number : 0 417 282 B1

(12) **EUROPEAN PATENT SPECIFICATION**

(45) Date of publication of patent specification : **26.05.93 Bulletin 93/21**

(51) Int. Cl.$^5$ : **B01J 41/12,** B01J 41/14, C08F 8/32, C08F 8/44

(21) Application number : **89903242.9**

(22) Date of filing : **10.03.89**

(86) International application number : **PCT/JP89/00264**

(87) International publication number : **WO 90/10500 20.09.90 Gazette 90/22**

# (54) ANION EXCHANGER AND USE FOR TREATING FLUID.

(43) Date of publication of application : **20.03.91 Bulletin 91/12**

(45) Publication of the grant of the patent : **26.05.93 Bulletin 93/21**

(84) Designated Contracting States : **DE FR GB IT**

(56) References cited :
**JP-A- 6 475 041**
**JP-B- 5 618 139**
**US-A- 2 840 533**
**US-A- 3 567 369**
**Miyahara Shozo, Omagari Takaaki, Sakai Shigeaki (Separate Volume Kagaku Kogyo 28-16 Zoho Jitsuyo Ion Kokan) Enlarged edition 30, August 1984 (30.08.84) Kagaku Kogyo-sha P. 2-6**

(73) Proprietor : **TORAY INDUSTRIES, INC.**
**2-1, Nihonbashi Muromachi 2-chome Chuo-ku Tokyo 103 (JP)**

(72) Inventor : **HENMI, Masahiro A2-33, 5, Sonoyama 2-chome Otsu-shi Shiga 520 (JP)**
Inventor : **NOYORI, Ken 451-118, Ise-cho Moriyama-shi Shiga 524 (JP)**
Inventor : **YOSHIOKA, Toshio 1-44, Ichiriyama 2-chome Otsu-shi Shiga 520 (JP)**

(74) Representative : **Coleiro, Raymond et al**
**MEWBURN ELLIS & CO. 2/3 Cursitor Street London EC4A 1BQ (GB)**

EP 0 417 282 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

Technological Field

The present invention relates to a new anion exchanger, especially an anion exchanger with excellent heat resistance and its use for treating a fluid.

Up to this time, anion exchangers have been widely used as adsorbents for variety of ionic substances. As anion exchanging groups, primary, secondary and tertiary amines and quarternary ammonium salts can be cited, but among them, those which are of the trimethylbenzylammonium type wherein trimethylamine is bound with a benzyl group of a polymonovinyl aromatic compound through a covalent bond exhibit excellent ion exchange ability and are widely used.

However, these trimethylbenzylammonium salt type ion exchangers gradually decompose even at room temperature and the decomposition speed of the ammonium salt becomes large especially at 60°C or higher.

It is therefore impossible to use these at elevated temperature. Therefore, when a fluid to be treated is at higher temperature, the treatment should be performed after the temperature is actually lowered down to 20-40°C and there exists therefore such defects as large energy loss and poor efficiencies in ion exchange and adsorption. In addition, there exists a fatal defect that amine is generated by decomposition even at room temperature. Therefore, an anion exchanger with higher heat resistance is needed.

We have been extensively investigating these problems to overcome them.

The present invention provides to an anion exchanger characterized by having an anion exchanging group of the following chemical formula (I) and its use for treating a fluid using said anion exchanger.

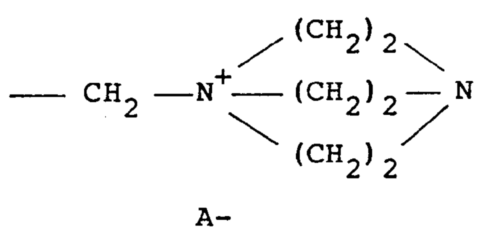

..... (I)

Most of the conventional anion exchangers have an anion exchanging group of the following chemical formula (II).

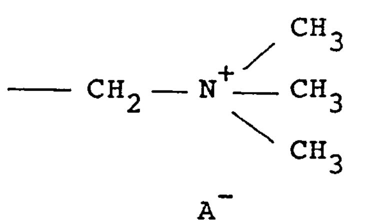

.... (II)

The exchanging group (I) of the present invention exhibits such excellent features that not only the total amount of the exchanging groups is large, but also surprisingly, the heat resistance is high. This is caused by a unique structure of the exchanging group (I).

The maximum working temperature of the conventional exchanging group (II) is 60°C and it is usually used at 20-40°C. On the other hand, the exchanging group (I) is stabler than the exchanging group (II) and can be used at 60°C or higher.

Therefore, it can be used in such fields where anion exchangers have not been applied so far due to poor heat resistance, e.g. in the field of hot ultrapure water and where the working temperature has been unavoidably lowered, e.g. in the field of nuclear reactors and purification of medicines. In addition, as no odor characteristic of amines comes out, it can be also used for treating air and exhaust gas and removing smoke of tobacco and other bad odors. Furthermore, as there is little change with time and decomposed substance and elute come out little, it can be also used as a blood purification material, a filler for analysis and an ion exchange paper.

Therefore, the present invention can contribute largely to energy saving in these fluid treating fields and

achieve high clarification and fine analysis.

In the present invention, as a base body of the anion exchanger, polymonovinyl aromatic compounds and phenolic resins are preferably used. For example, styrene-divinylbenzene copolymer, homopolymers and copolymers of styrene, vinyltoluene etc., phenol resins and blends thereof can be cited. In addition, other polymer components such as poly ($\alpha$-olefin) can be incorporated in these polymers as a blend or a composite. Furthermore, graft polymers of a monovinyl aromatic compound such as styrene onto vinyl polymers such as polyolefins, polyacrylates, halogenated polyolefins and flourinated polymers, polysaccharides such as cellulose and cellulose derivatives, polyamides, polyimides, polyesters, preferably in view of chemical resistance, poly-$\alpha$-olefins such as polypropylene and polyethylene and fluorinated polymers such as tetrafluoroethylene and polyvinylidene fluoride can be cited.

In the exchanging group (I), $A^-$ means a counter anion and is usually $OH^-$, a halogen anion, $BF_4^-$, $PCl_6^-$, and more preferably $OH^-$ or $Cl^-$. It is possible that a benzene nucleus of a polymonovinyl aromatic compound or a phenol resin can be directly bound with the exchanging group (I) through a direct covalent bond or containing an atomic group, a so-called spacer between them. As the spacer, $-(CH_2)_n-$ (wherein n=1-10), those containing an ether bond such as $-CH_2-O-CH_2$ and amide bond can be cited.

The anion exchanger of the present invention has usually 0.1 mol or more, preferably 0.2 mol or more exchanging group based on 1 mol said benzene nucleus.

When the polymonovinyl aromatic compound is not crosslinked, it is used as a liquid anion exchanger, but it is usually used in a crosslinked and insolubilized condition from the view point of form retention property. Styrene-divinylbenzene copolymer has already a crosslinked structure. On the other hand, for the polymers such as styrene and vinyltoluene, methylene group, methoxymethylene group etc., can be cited as the crosslinking group.

As the shape of a crosslinked and insolubilized anion exchanger of the present invention, resinlike (granulated and powdery), filmlike and fibrous (filamentary, short fiber, braided, knitted and woven and paperlike) shapes can be cited, but fibrous shapes are preferable from the view point of the size of the surface area and freedom for shape design. A fiber containing a reinforcing polymer, especially a polycore type composite or mixed fiber wherein a polymonovinyl aromatic compound is the sheath component and a poly($\alpha$-olefin) for reinforcement is the core component is preferably used from the points of strength and water-permeability.

The method for preparation of the anion exchanger with excellent heat resistance of the present invention is not especially limited and will be explained by using examples as follows.

As a gel type resin and a macroreticular (MR) type resin, which are styrene-divinylbenzene copolymers, have crosslinked structures, chloromethyl groups are introduced in the aromatic nuclei as they are by means of a usual method. Furthermore, the chloromethylated resin is treated and reacted with a solution of triethylenediamine of said structural formula to prepare an anion exchanger of the present invention. As the solvent of triethylenediamine, water, alcohols such as methanol and ethanol, hydrocarbon solvents such as benzene and toluene and polar solvents such as N,N-dimethyl-formamide and N-methylpyrrolidone can be cited.

On the other hand, the fibrous material is prepared by the following procedures. The fibrous material is prepared in such a way that a polymonovinyl aromatic compound is a main component of the sea component and a poly ($\alpha$-olefin) as a reinforcing polymer is an island component. After the fibers are made into variety of shapes, methylene crosslinking bondings are introduced by treating them with a sulfuric acid solution containing a formaldehyde source to insolubilize the sea component. Then, in the same way as the resin, chloromethyl groups are introduced and furthermore, they are treated and reacted with triethylenediamine to prepare an anion exchange fiber of the present invention.

The present invention also includes the use of the anion exchanger having said exchanging group (I) as at least one component of an ion exchanger and an adsorbing material, for performing ion exchange or absorption treatment in a fluid. Said anion exchanger can be used alone or by mixing with other ion exchanger or adsorbing material or using alternately with them. No limitation exists on how to combine it with other ion exchanger and adsorbing material. As the ion exchanger, cation exchangers having sulfonic acid groups, phosphoric acid groups or carboxylic acid groups, chelating exchangers having aminocarboxylic acid groups, amidoxime groups, aminophosphoric acid groups, polyamine groups, dithiocarbamic acid groups can be cited. As the adsorbing material, active carbon and zeolite can be cited.

The method for treating a fluid of the present invention can be applied in the fields where the conventional anion exchangers have been used, e.g. preparation of pure water, water-recycling systems and a pure water systems in nuclear power plants and thermal power stations, recovery of useful inorganic anions, decoloring and desalting of sugar solutions, purification and separation of antibiotics and various medicines, purification and separation of amino acids, adsorption of organic bases, adsorption of surface active agents, purification of iodine, adsorption of coloring matters such as dyes, adsorption and removal of proteins, peptides, enzymes, nucleic acids, hormones, alkaloids, nucleotides, lipids, steroids, cells such as bacilli, inorganic colloids such

as iron oxide and silica and organic colloids, and furthermore, it can be applied in the fields where the fluid is a liquid such as water and chemicals e.g. purification of organic chemicals such as methanol and acetone. In addition, it can be also applied in fields where the fluid is gas such as adsorption and removal of an acidic gas such as hydrogen sulfide, hydrogen halide, sulfur dioxide, iodine gas, methyl iodide gas and bad odor.

However, the method for treating a fluid of the present invention can be effectively applied in the fields where application and clarification are difficult by the conventional anion exchangers.

This will be explained in more detail with reference to specific applications.

In the preparation of ultrapure water, both a cation exchanger having sulfonic acid groups and an anion exchanger are used conventionally but a very small amount of organic substances (TOC) is produced caused by the decomposition of the anion exchanger and this produces a problem in washing semiconductors corresponding to 4 M bits or larger. In addition, there exists a fatal defect that as the anion exchanger decomposes, a part of ion exchanger cannot be sterilized with hot water. Furthermore, from the viewpoint of effective washing, it is required to manufacture continuously hot ultrapure water by means of an ion exchanger. The method for treating a fluid of the present invention can effectively contribute to the preparation of this ultrapure water.

In the treatment of the recycling water in the nuclear power plants, both a cation exchanger and an anion exchanger are used conventionally, but in practice the recycling water at 100°C is intentionally cooled down to 30-40°C from the point of decomposition (heat resistance) of the conventional anion exchanger and the energy loss is tremendous. The method for treating of the present invention enables a treatment at high temperature and is extremely effective for the treatment of the recycling water in nuclear power plants.

In purification of highly pure chemicals for the electronic industry such as methanol, propanol, acetone and hydrogen peroxide water, removal of fine particles and ions at high level is important, but when the conventional anion exchanger is used, there exists a defect that decomposition occurs and a very small amount of organic substances (TOC) is generated. From this point of view, the method for treating a fluid of the present invention is effective for purification treatment of highly pure chemicals for the electronic industry.

On the other hand, when the conventional anion exchanger is dried, odor of amine caused by decomposition is very excessive and it is not applied for purification of air, and removal of harmful substances in the smoke of tobacco and other bad odors. No odor is generated in the method for treating of the present invention and it exhibits effectiveness for high cleaning treatment of gas by making it into air filters, masks, tobacco filters etc.

In addition, as change in the anion exchanger with time and eluted substances caused by decomposition is very little in the method for treating a fluid of the present invention, it is especially useful for analytical treatment, cleanup and purification of blood when it is used in the form of an ion exchange paper.

As described above, at first, the present invention provides an anion exchanger with large exchange capacity and excellent heat resistance and secondarily, an epoch-making use for treating a fluid.

Embodiments of the present invention will now be described with reference to the following Examples.

## Examples

The exchange capacity (milli-equivalent) was measured as follows. 50 ml of 0.1 N hydrochloric acid was added in 0.5 g of $OH^-$ type anion exchanger and the mixture was shaken for 4 hr. 5 ml thereof was taken out and 5 ml of 0.1 N sodium hydroxide aqueous solution was added and the mixture was titrated by using 0.1 N hydrochloric acid. Specific electric resistance, total organic carbon, atomic-absorption spectrum and inorganic anion were respectively measured by means of AQ-11 type specific resistance meter manufactured by DKK Co., Ltd., Automatic analyzer TOC 710 type manufactured by Toray Engineering Co., Ltd., Z8000 flameless atomic-absorption spectroscope manufactured by Hitachi Ltd., and Model IC500P ion-chromatoanalyzer manufactured by Yokogawa Hokushin Electric Works, Ltd.

Quantitative analyses of iodine gas and hydrogen cyanide gas were performed by using Kitagawa type gas detector.

## Example 1

A multi-core islands-in-a-sea type composite fiber (undrawn) [sea component (polystyrene)/island component (polyethylene)=50/50; number of islands was 16; the fiber diameter was 34μ] was cut into a cut fiber of 0.5 mm in length. 10 parts by weight of said cut fibers were added to a crosslinking liquid consisting of 50 parts by volume of the commercially available first class sulfuric acid, 5 parts by volume of water and 2 parts by weight of paraformaldehyde and the reaction was performed at 60°C for 4 hr. The fibers were washed and dried. Then, the obtained crosslinked fibers were added to a chloromethylation liquid consisting of 3 parts by volume of chloromethyl ether, 8 parts by volume of tetrachloroethane and 0.15 part by volume of stannic chloride and the reaction was performed at 50°C for 4 hr to obtain chloromethylated fibers. 1 part by weight of these chloromethylated fibers was added in a reaction liquid consisting of 2 parts by weight of triethylenediamine and 15 parts by volume of N,N-dimethylformamide and reacted at 60°C for 4 hr to obtain triethylenediamine type anion exchange fibers of formula (I) of the present invention.

Hot water treatment at 100°C and dry treatment at 80°C on the obtained anion exchange fibers (OH type) were performed and exchange capacities before and after the treatments were measured. The obtained results were summarized in Table 1.

Comparative Example 1

1 part by weight of the chloromethylated fibers described in Example 1 was added to 10 parts by volume of 30% trimethylamine aqueous solution and amination was performed at 30°C for 3 hr and then washing was done to obtain trimethylammonium type anion exchange fibers (OH type) of formula (II). These were heat-treated in the same way as Example 1 and the exchange capacities before and after the treatments were measured. The obtained results were summarized in Table 1.

As shown in Table 1, the residual ratio of exchange capacity was higher for the anion exchange fiber obtained by the present invention after both hot water and dry heat treatments and the value was remarkably excellent under dry condition.

Table 1 Changes in Exchange Capacities after Heat Treatments

| | | Exchange capacity (milli-equivalent) | | Residual ratio (%) |
|---|---|---|---|---|
| | | Before treatment | After treatment | |
| Hot water treatment | Example 1 | 2.8 | 2.6 | 93 |
| | Comparative Example 1 | 2.0 | 1.6 | 80 |
| Dry heat treatment | Example 1 | 2.8 | 2.6 | 93 |
| | Comparative Example 1 | 2.0 | 1.4 | 70 |

Example 2

10 parts by weight of cut fibers obtained in Example 1 were treated and reacted with a crosslinking sulfonating liquid consisting of 75 parts by volume of sulfuric acid and 1 part by weight of paraformaldehyde at 90°C for 4 hr to obtain sulfonic acid type cation exchange fibers.

An ion exchange column (1) of an apparatus consisting of the ion exchange column (1), a reverse osmosis membrane (2) and a heater (3) was packed with a mixture of the sulfonic acid type cation exchange fiber (H type) and the triethylenediamine type anion exchange fiber obtained by Example 1 (OH type) at a mixing ratio of 1:1 (the dry weight was 100 g).

Sterilization in the apparatus was peformed by passing an original water (specific electric resistance was 0.1 MΩ·cm and TOC was 60 ppb) through the apparatus, elevating the temperature of water up to 80°C by heating, stopping water supply and circulating water between (1)-(3) for 1 hr. After sterilization was completed, water circulation was stopped and ultrapure water was manufactured by passing the original water at a speed of 60 ℓ/hr. The quality of water after 30 min at a sampling hole was measured and the results were shown in Table 2.

Comparative Example 2

A mixture of the sulfonic acid type cation exchange fibers (H type) obtained by Example 2 and the trimethylammonium type anion exchange fibers (OH type) obtained by Comparative Example 1 at a mixing ratio of 1:1 (the dry weight of 100 g) was packed in the column (1) of the apparatus of Example 2 and the same tests as those in Example 2 were performed. The results were shown in Table 2.

As clearly shown in Table 2, as the anion exchanger of the present invention exhibited excellent heat resistance, after heat sterilization, eluted substances caused by decomposition were extremely small and rise in specific resistance was fast and the value of TOC was low. As described above, sterile management during operation was easy and it was suitable for manufacturing ultrapure water.

Table 2 Measured Results of Water Qualities

| | Specific electric resistance (MΩ·cm) | TOC (ppb) | Rising time in specific resistance (min) |
|---|---|---|---|
| Example 2 | 18.25 | 20 | 5 |
| Comparative Example 2 | 18.20 | 60 | 30 |

Example 3

10 parts by weight of the cut fibers obtained by Example 1 were treated and reacted with a crosslinking sulfonating liquid consisting of 75 parts by volume of sulfuric acid and 0.6 parts by weight of paraformaldehyde at 90°C for 4 hr and additionally at 100°C for 3 hr to obtain sulfonic acid type cation exchange fibers.

50 g of the triethylenediamine type anion exchange fibers (OH type) obtained by Example 1 and 50 g of the sulfonic acid type cation exchange fibers (H type) were mixed and stirred in pure water and the mixture was packed in a column. Pure water at 80°C containing 20 ppb of ferric oxide ($\alpha$-$Fe_2O_3$) was passed through it at a speed of 60 ℓ/hr and specific electric resistance (MΩ·cm), iron concentration (ppb by means of atomic-absorption spectroscopy) and TOC (ppb) were measured at the outlet. The results obtained were shown in Table 3.

Comparative Example 3

50 g of the trimethylammonium type anion exchange fibers (OH type) and 50 g of sulfonic acid type cation exchange fibers (H type) were mixed and stirred in pure water and the mixture was packed in a column. The same tests as those in Example 3 were performed and the results were shown in Table 3.

As clearly shown in Table 3, as the anion exchanger of the present invention exhibited excellent heat resistance, decrease in performance caused by decomposition of the functional groups was small and eluted substances were little even when the liquid was run at high temperature and as the result, comparing with the case where the conventional anion exchanger was used, water quality of the treated water was extremely good. It was found as described here that the method for treating of the present invention was effective for treatment of recycling water at high temperature and manufacturing of hot ultrapure water.

Table 3 Test Results on the Run of Water Containing Iron Oxide

| | Specific electric resistance (MΩ•cm) | Concentration of iron (ppb) | TOC (ppb) |
|---|---|---|---|
| Example 3 | 18.25 | 0.5 or less | 20 |
| Comparative Example 3 | 18.15 | 0.5 or less | 100 |

Example 4

10 parts by weight of the triethylenediamine type anion exchange fibers obtained by Example 1, 2.5 parts by weight of a polyethylene synthetic pulp and 1ℓ of pure water were beaten and made into a paperlike material by means of a paper-making machine. Then, the paperlike material was dehydrated under compression and after a drying process, a surface treatment was performed thereon by means of hot rolls under pressure to prepare a sheetlike material with excellent wet strength. No odor came out at all during manufacturing.

Said sheetlike material was set on a filter apparatus and a testing water containing 10 ppb ionic chromium and pretreated with a cation exchanger was passed through it. Chromium ion after passing water was quantitatively analyzed by means of atomic-absorption spectroscopy and the collecting efficiency calculated by the following equation was 99%.

In addition, after said sheetlike material was sealed and kept in a polyethylene bag for a month, another collecting test was performed again by said method. In this case, the collecting efficiency was found to be 99% again and no deterioration was recognized.

$$\text{Collecting efficiency (\%)} = \left(1 - \frac{\text{Concentration at outlet}}{\text{Concentration at inlet}}\right) \times 100$$

Comparative Example 4

Using the trimethylamine type anion exchange fibers (OH type) obtained by Comparative Example 1, a sheet was made by the same procedures as those of Example 4 and the same tests were performed.

Amine odor was recognized and the collecting efficiency was 95% just after the sheet was made and decreased to 90% after one month. Heat deterioration during manufacturing and decrease in properties with time were recognized. In addition, a ventilating apparatus was needed as odor was terrible during manufacture of the sheets.

Example 5

5 g of triethylenediamine type anion exchange fibers obtained by Example 1 were packed in a glass column and 500 ml of hydrogen peroxide aqueous solution (the concentration was 34%) were passed through it at a speed of 25 ml/min.

Concentrations of sulfuric acid ion ($SO_4^{--}$) and phosphoric acid ion ($PO_4^{---}$) before and after the treatment by passing the fluid were quantitatively analyzed by means of an ion chromatography and the results were shown in Table 4. It was recognized that the method for treating of the present invention was effective for purification of high purity chemicals.

Table 4 Concentration of Impurity Ions in Hydrogen Peroxide Aqueous Solution

| | Before treatment (ppb) | After treatment (ppb) |
|---|---|---|
| $SO_4^{--}$ | 710 | 20 |
| $PO_4^{---}$ | 250 | 8 |

Comparative Example 5

The same tests as those in Example 5 were performed on the trimethylamine type anion exchange fibers (OH type) obtained by Comparative Example 1 and it was found that comparing with Example 5, large amount of bubbles were generated and hardly treated.

Example 6

1 g of triethylenediamine type anion exchange fibers (OH type) obtained by Example 1 was packed in a packed column and gaseous iodine generated by means of an iodine gas generating apparatus was passed through it at a speed of 45 cm/sec (the concentration of iodine was 1 ppm). No iodine was detected at the outlet of the packed column. No odor was detected either. It was made clear that the method for treating of the present invention can be applied for treating air.

Comparative Example 6

The same tests as those in Example 6 were performed on the trimethylamine type anion exchange fiber (OH type) obtained by Comparative Example 1 and it was found that adsorption characteristics of iodine was good but odor (amine odor) at the outlet was extremely strong.

Example 7

20 mg of triethylenediamine type anion exchange fibers (OH type) obtained by Example 1 were packed in a filter part of a commercially available tobacco ("Cherry" manufactured by Japan Tobacco Co., Ltd. and a smoking test was done by means of an automatic smoking apparatus under such conditions as a flow quantity of 17.5 ml/sec, a smoking time of 2 sec, a smoking distance of 58 sec and a burning length of 40 mm. The quantities of tar and hydrogen cyanide passed through the filter were measured and it was found that the quantities were decreased to 80% and 50% respectively, compared with those of the commercially available tobacco. In addition, change in smoking taste was very little. It was found that the method for treating of the present invention was effective for removing harmful gases in the smoke of tobacco.

Comparative Example 7

The trimethylamine type anion exchange fibers obtained by Comparative Example 1 were packed in the same way as Example 7 and the same tests were performed. It was found that odor was terrible and smoking taste was remarkably spoiled.

## Claims

1. An anion exchanger characterized by having an anion exchanging group of the following chemical formula:-

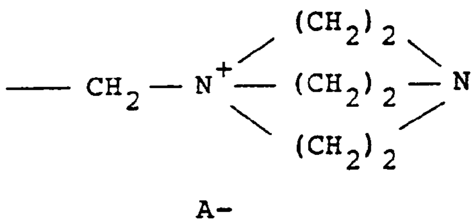

where $A^-$ is a counter ion.

2. An anion exchanger according to Claim 1, wherein said anion exchanging group binds with an aromatic nucleus of a side chain.

3. An anion exchanger according to Claim 1, wherein said anion exchanger consists of a polymonovinyl aromatic compound and said anion exchanging group binds with an aromatic nucleus of a side chain.

4. An anion exchanger according to any preceding Claim, which is crosslinked and insolubilized.

5. The use of an anion exchanger according to any of claims 1 to 4 for performing ion exchange or adsorption treatment in a fluid.

**Patentansprüche**

1. Anionenaustauscher, dadurch gekennzeichnet, daß er eine Anionenaustauschgruppe der folgenden chemischen Formel aufweist:

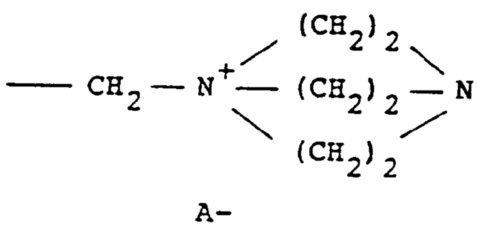

worin $A^-$ ein Gegenion ist.

2. Anionenaustauscher nach Anspruch 1, worin die genannte Anionenaustauschgruppe an einen aromatischen Kern einer Seitenkette bindet.

3. Anionenaustauscher nach Anspruch 1, worin der genannte Anionenaustauscher aus einer aromatischen Polymonovinylverbindung besteht und die genannte Anionenaustauschgruppe an einen aromatischen Kern einer Seitenkette bindet.

4. Anionenaustauscher nach einem der vorhergehenden Ansprüche, der vernetzt und nicht solubilisiert ist.

5. Verwendung eines Anionenaustauschers nach einem der Ansprüche 1 bis 4 zur Durchführung von Ionenaustausch- oder Adsorptionsbehandlung in einem Fluid.

**Revendications**

1. Echangeur d'anions caractérisé en ce qu'il a un groupe d'échange d'anions de la formule chimique suivante :

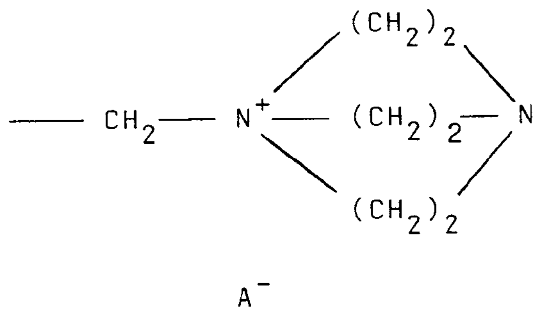

où $A^-$ est un contre-ion.

2. Echangeur d'anions selon la revendication 1, où ledit groupe d'échange d'anions se lie à un noyau aromatique d'une chaîne latérale.

3. Echangeur d'anions selon la revendication 1, où ledit échangeur d'anions consiste en un composé polymonovinylique aromatique et ledit groupe d'échange d'anions se lie à un noyau aromatique d'une chaîne latérale.

4. Echangeur d'anions selon toute revendication précédente, qui est réticulé et insolubilisé.

5. Utilisation d'un échangeur d'anions selon l'une quelconque des revendications 1 à 4, pour accomplir un traitement d'échange d'ions ou d'adsorption dans un fluide.